# EUROPEAN PATENT APPLICATION

(11) **EP 1 369 153 A1**
(43) Date of publication of application: **10.12.2003**
(21) Application number: 03012175.0
(22) Date of filing: 03.06.2003
(51) Int. Cl.: A63F 13/02, A63F 13/04

(54) **Electronic competition system, electronic competition method, server and computer program**

(30) Priority: 07.06.2002 JP 2002167324
(71) Applicant: NEC CORPORATION, Tokyo (JP)
(72) Inventor: Abe, Yusuke, Nec Costum Technica, Ltd., Tokyo (JP)
(74) Representative: VOSSIUS & PARTNER

(57) **Abstract**

An electronic competition system has a plurality of shooting bases each comprised of a laser gun for emitting light, a plurality of strike point detectors each for detecting a strike point on a target board on which the light emitted from the laser gun strikes, and a viewing PC for displaying a competition progress including the strike point detected by each of the strike point detectors. A competition site server is provided for displaying, in response to strike points detected by the strike point detectors, competition progresses at the respective shooting bases in an order in which the strike points are detected.

## Description

The present invention relates to an electronic competition system and method for playing an electronic competition among a plurality of competitors, and more particularly, to an electronic competition system and method for playing a shooting competition in which a plurality of competitors compete in score which is calculated according to a strike point of each light bullet discharged to a target through manipulations on a light-beam gun, in place of a real bullet firing competition which uses real bullets.

Shooting has been conventionally known as one of competition items. In the shooting, it is desired to use a light-beam gun in place of a real bullet gun for discharging real bullets because special attention must be paid to the real bullet gun in handling and the like from a viewpoint of safety. Known light-beam guns may be classified into one which is developed for competition and uses flash light, and one for use in practice which is connected to a computer through a wire for displaying an impact.

However, when the light-beam gun is connected to a computer through an electric wire, the electric wire can subtly affect the senses of competitors, which are well-sharpened, to damage the mental tranquil and concentration. Therefore, there is a need for eliminating the connection of the light-beam gun with the computer through the electric wire. The light-beam gun is also required to provide a competition level of accuracy for detecting a strike point of laser light emitted therefrom in an optical system, and is also required to ensure the safety because the laser light is emitted therefrom. The light-beam gun is further required to improve the exactitude and speed of competition score counting processing on top of the foregoing requirements fully satisfied.

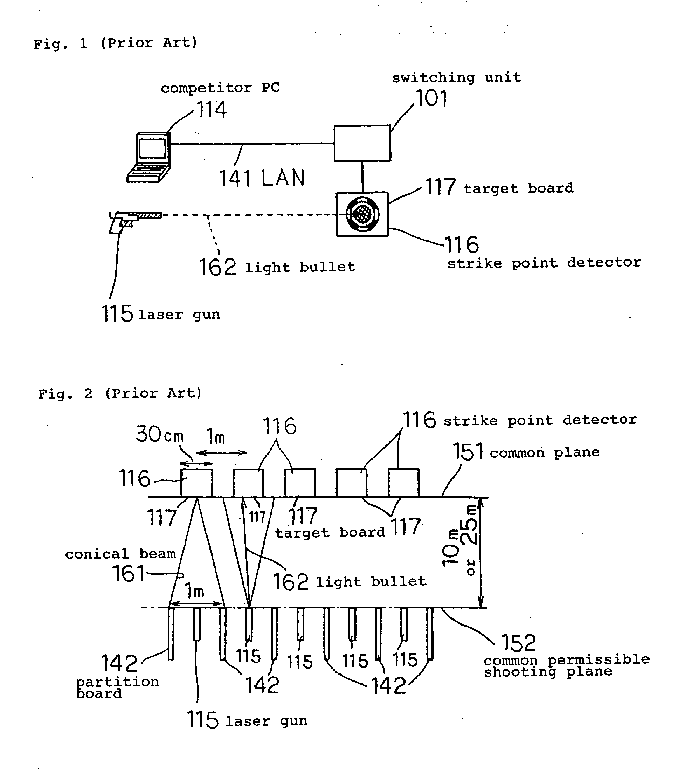

Fig. 1 is a diagram illustrating an exemplary configuration of a conventional electronic competition system which uses a laser gun which emits laser light for shooting.

As illustrated in Fig. 1, the prior art example comprises laser gun 115 which is operated by a competitor for discharging an light bullet 162 implemented by laser light; strike point detector 116 which has a target board 117 removably mounted thereon, which receives light bullet 162 discharged from laser gun 115, for detecting a strike point of light bullet 162 on target board 117; competitor PC 114 installed near a shooting seat for displaying a resulting strike detected by strike point detector 116; and a switching unit 101 for connecting strike point detector 116 with competitor PC 114. Laser gun 115 and strike point detector 116 are located away from each other by a distance which is predefined for the shooting, so that a target board of a kind commensurate with the distance is selectively mounted on strike point detector 116. Switching unit 101 comprises a switching hub for LAN 141 of 10BASE-T.

The following description will be centered on how a competition is played in the electronic competition system configured as described above.

Fig. 2 is a diagram for describing how a competition is played in the electronic competition system illustrated in Fig. 1.

As illustrated in Fig. 2, a plurality of strike point detectors 116 shown in Fig. 1 are disposed in correspondence to a plurality of shooting boxes, each of which is defined by two partition boards 142. While Fig. 2 shows five sets of shooting boxes and strike point detectors 116 by way of example, the number of the sets is not limited. One shooting box and one strike point detector 116 are in one-to-one correspondence with respect to position as well as competition, so that in principle, light-beam guns will never discharged from a single shooting box to a plurality of strike point detectors 116. In addition, square or circular target board 117 is mounted on the front face of each strike point detector 116.

A common plane 151 is formed by the front faces of respective target boards 117, while each shooting box is formed with common permissible shooting plane 152. Common plane 151 and common permissible shooting plane 152 are in parallel with each other, and are both vertical planes. The distance between common plane 151 and common permissible shooting plane 152 is shown to be 10 m or 25 m, by way of example, based on a particular play item. The shooting box has a lateral width on common permissible shooting plane 152 set at 1 m when one gun is corresponded to one target, but is variably defined when one gun is corresponded to n targets. The lateral width of the strike point detector 116 is shown to be 30 cm, by way of example, and two adjacent strike point detectors 116 has a center-to-center distance illustratively set at 1 m.

As a competitor manipulates laser gun 115 oriented toward target board 117 to force laser gun 115 to discharge light bullet 162, such as pulling a trigger of laser gun 115, light bullet 162 implemented by laser light is discharged from laser gun 115. A light source for use in generating light bullet 162 discharged from laser gun 115 is, for example, a semiconductor laser oscillation device.

In this event, strike point detector 116 transmits a conical beam 161, generated by an infrared LED, toward the shooting box, so that the competitor is not allowed to discharge light bullet 162 unless conical beam 161 transmitted from strike point detector 116 is not received by laser gun 115, i.e., unless laser gun 115 is not oriented to target board 117 within the shooting box, thereby ensuring the safety of the competition. In this electronic competition system, since target board 117 is involved in generating a signal which constitutes a sufficient condition for permitting the competitor to discharge light bullet 162 from laser gun 115, the competition is not driven by the gun but by the target, thereby resulting in an impartial competition system in which the will of the competition host (judge) is respected. It should be noted that each conical beam 161 emitted from strike point detector 116 only reaches the opposing shooting box and does not reach two shooting boxes in principle. Further, in this system, since laser gun 115 need not transmit information to the outside except for light bullet 162, laser gun 115 need not be connected to competitor PC 114 through a wire.

Light bullet 162 discharged from the muzzle of laser gun 115 travels straight in a direction in which laser gun 115 is oriented, as is the case with a real bullet discharged from a real bullet gun. Light bullet 162 discharged from the muzzle of laser gun 115 has a signal uniquely corresponding to laser gun 115. Light bullet 162 has high parallel convergence and therefore strikes on target board 117 in the shape of light spot.

As light bullet 162 discharged from laser gun 115 strikes on target board 117 mounted on strike point detector 116, the strike point is detected by strike point detector 116 which transmits information on the detected strike point to competitor PC 114 through switching unit 101. Here, since strike point detector 116 has an adjustment function for increasing an electric, mechanical and optical accuracy of an optical device for detecting the position, the strike point of the laser light can be detected at a competition level of accuracy.

Competitor PC 114 calculates a score for shooting based on the strike point information transmitted from strike point detector 116, and displays the calculated score. Since competitor PC 114 has previously registered with information which can identify a competitor such as a registration number of the competitor, as well as information such as the number of times the competitor has so far shot laser gun 115, competitor PC 114 displays, simultaneously or with a delay, the registration number of the competitor, a bullet number, a score associated with the bullet number, a total score, a strike point of light bullet 162 on target board 117.

Here, a plurality of light bullets 162 are discharged from laser gun 115 in response to a single triggering operation. In this way, not only scores of respective light bullets 162 can be averaged, but also a score can be found for each light bullet 162. Such a score counting method can give a score difference based on subtle vibrations of a hand after the trigger is pulled, evaluate characteristics such as swinging of the body of the competitor, and accordingly provide a new competition implementation which has not been so far available in a single real bullet shooting competition.

Light bullet 162 also includes a strike point detection signal for use in detecting a strike point, and an light bullet distinguishing signal for distinguishing this light bullet from others. The strike point detection signal is transmitted to target board 117 even when the competitor is not triggering laser gun 115, thereby permitting strike point detector 116 to detect the strike point. In this way, strike points of a plurality of light bullets 162 from single laser gun 115 can be traced as a continuous dot train.

In real bullet shooting, a competitor first confirms the feeing of the gun before starting a competition, and during the competition, shoots laser gun 115 on a trial basis not intended for getting a score before serious shooting intended for getting a score. For this purpose, the electronic competition system also provides a serious shooting mode and a trial shooting mode for operation modes.

The competitor first confirms the feeling of laser gun 115 which is not conditioned to discharge light bullet 162 in a preparatory period before the start of a competition, switches the operation mode to the trial shooting mode after the competition is started for trial shooting not intended for a score, and again switches the operation mode to the serious shooting mode after completion of trial shooting for serious shooting intended for a score.

As described above, the electronic competition system available in recent years is safer than the real bullet shooting and has a high applicability in regard to the manner in which competitions are performed. With the electronic competition system as described above, it is anticipated that the population of competitors will take wing in the future as a general competition from the advantages mentioned above. It is also anticipated that the competition will be expanded to such an extent that competition meetings will take place on a national scale or on a global scale in the future.

For this purpose, the electronic competition system as described above is required to communicate the progress and result of a competition to competitors who participate in the competition, and spectators who watch the competition in a readily understandable way and in a variety of representations.

It is an object of the present invention to provide an electronic competition system and method which are capable of communicating the progress and result of a competition to competitors who participate in the competition and spectators who watch the competition in such a manner that the competitors and spectators are interested in the competition.

To achieve the above object, an electronic competition system according to the present invention has a plurality of light-beam guns each for emitting light, a plurality of strike point detecting means each for detecting a strike point on a target board of the light emitted from the light-beam gun associated therewith, and first display means for displaying a competition progress including the strike point detected by the strike point detecting means. The electronic competition system further has a server responsive to strike points detected by the plurality of strike point detecting means for displaying on the first display means the competition progress in an order in which the strike points are detected.

The server may display a strike point on the first display means in real time when the strike point is detected by the strike point detecting means.

Another electronic competition system according to the present invention has a light-beam gun for emitting light, a strike point detecting means for detecting a strike point on a target board of the light emitted from the light-beam gun, and first display means for displaying a competition progress including the strike point detected by the strike point detecting means. The electronic competition system also has a server for displaying on the first display means a competition progress including the strike point detected by the strike point detecting means simultaneously with information on a competitor who plays a competition against the strike point detecting means.

The server may simultaneously display on the first display means information on a plurality of competitors, and competition progresses of the respective competitors.

Alternatively, the server may simultaneously display on the first display means information on all competitors who participate in the competition, and competition progresses of the respective competitors.

Further alternatively, the server may simultaneously display on the first display means information on competitors who satisfy a predetermined condition out of the competitors who participate in the competition, and the competition progresses of the respective competitors.

Another electronic competition system according to the present invention has a light-beam gun for emitting light, a strike point detecting means for detecting a strike point on a target board of the light emitted from the light-beam gun, and second display means for displaying the strike point detected by the strike point detecting means, wherein the electronic competition system determines a strike point on the target board as a strike result at a timing at which a predetermined manipulation is made on the light-beam gun which continuously emits light. The electronic competition system has a mode in which the strike point on the target board is not displayed on the second display means.

In this mode, the strike point on the target board may not be displayed on the second display means until the predetermined manipulation is performed on the light-beam gun.

Also, in this mode, the strike point on the target board may not be displayed on the second display means until the predetermined manipulation is performed on the light-beam gun, and the timing at which the manipulation is performed is detected by the strike point detecting means.

The mode can be set on the second display means, wherein information on the strike point on the target board is made invalid when the mode is set.

The mode can be set on the light-beam gun, wherein the light-beam gun may add to the light a signal for making invalid a display of the strike point of emitted light when the mode is set, and the second display means may not display the strike point of the light on the target board when the light emitted from the light-beam gun includes the signal for making the display invalid.

Another electronic competition system according to the present invention has a light-beam gun for emitting light, a strike point detecting means for detecting a strike point on a target board of the light emitted from the light-beam gun, and first display means for displaying a competition progress including the strike point detected by the strike point detecting means, wherein the first display means is installed to be invisible at a position at which a competitor plays a competition by emitting light from the light-beam gun.

Alternatively, the first display means may have a display screen oriented in a direction in which the display screen is invisible from the position.

A shield may be further disposed between the position and the first display means for making the first display means invisible from the position.

Another electronic competition system according to the present invention has a light-beam gun for emitting light, a strike point detecting means for detecting a strike point on a target board of the light emitted from the light-beam gun, and second display means for displaying the strike point detected by the strike point detecting means, wherein the second display means displays the strike point in enlarged view when the strike point detected by the strike point detecting means falls within a predefined area.

Specifically, the second display means may display the strike point in enlarged view when the strike point detected by the strike point detecting means falls within a predefined radius from the center of the target board.

Another electronic competition system according to the present invention has a light-beam gun for emitting light, a strike point detecting means for detecting a strike point on a target board of the light emitted from the light-beam gun, and second display means for displaying the strike point detected by the strike point detecting means, wherein the second display means displays the strike point in enlarged view when a predetermined score or higher is calculated based on the strike point detected by the strike point detecting means.

Another electronic competition system according to the present invention has a light-beam gun for emitting light, a strike point detecting means for detecting a strike point on a target board of the light emitted from the light-beam gun, and first display means for displaying a competition progress including the strike point detected by the strike point detecting means, wherein the first display means displays the strike point in enlarged view when the strike point detected by the strike point detecting means falls within a predefined area.

Specifically, the first display means may display the strike point in enlarged view when the strike point detected by the strike point detecting means falls within a predefined radius from the center of the target board.

Another electronic competition system according to the present invention has a light-beam gun for emitting light, a strike point detecting means for detecting a strike point on a target board of the light emitted from the light-beam gun, and first display means for displaying a competition progress including the strike point detected by the strike point detecting means, wherein the first display means displays the strike point in enlarged view when a predetermined score or higher is calculated based on the strike point detected by the strike point detecting means.

Another electronic competition system according to the present invention has a light-beam gun for emitting light, a strike point detecting means for detecting a strike point on a target board of the light emitted from the light-beam gun, and second display means for displaying the strike point detected by the strike point detecting means, wherein the second display means simultaneously displays a past competition progress and a current competition progress.

Another electronic competition system according to the present invention has a light-beam gun for emitting light, a strike point detecting means for detecting a strike point on a target board of the light emitted from the light-beam gun, and first display means for displaying a competition progress including the strike point detected by the strike point detecting means, wherein the first display means simultaneously displays a past competition progress and a current competition progress.

An electronic competition method according to the present invention uses a plurality of light-beam guns each for emitting light, and a plurality of strike point detecting means each for detecting a strike point on a target board of the light emitted from the light-beam gun associated therewith for competing for a score based on the strike point on the target board. The method includes detecting strike points by the plurality of strike point detecting means, and sequentially displaying a competition progress on display means in an order in which the strike points are detected, the competition progress including the strike points.

Alternatively, a strike point may be displayed on the display means in real time when the strike point is detected by the strike point detecting means.

Another electronic competition method according to the present invention uses a light-beam gun for emitting light, and a strike point detecting means for detecting a strike point on a target board of the light emitted from the light-beam gun for competing for a score based on the strike point on the target board. The method includes displaying on display means a competition progress including the strike point detected by the strike point detecting means simultaneously with information on a competitor who plays a competition against the strike point detecting means.

The electronic competition method may further has the steps of simultaneously displaying on the display means information on all competitors who participate in the competition, and competition progresses of the respective competitors, sequentially displaying on the display means information on all competitors who participate in the competition, and the competition progresses of the respective competitors on a competitor-by-competitor basis, and simultaneously displaying on the first display means information on competitors who satisfy a predetermined condition out of the competitors who participate in the competition, and the competition progresses of the respective competitors.

Another electronic competition method according to the present invention uses a light-beam gun for emitting light, and a strike point detecting means for detecting a strike point on a target board of the light emitted from the light-beam gun for competing for a score based on the strike point on the target board. The method has the steps of displaying a strike trace on the target board of the light emitted from the light-beam gun, disabling a display of the strike trace on the target board of the light emitted from the light-beam gun, detecting a strike point on the target board at a timing at which a predetermined manipulation is made on the light-beam gun, and displaying the detected strike point as a strike result.

Another electronic competition method according to the present invention uses a light-beam gun for emitting light, and a strike point detecting means for detecting a strike point on a target board of the light emitted from the light-beam gun for competing for a score based on the strike point on the target board. The method has the steps of displaying a strike trace on the target board of the light emitted from the light-beam gun, disabling a display of the strike trace on the target board of the light emitted from the light-beam gun, detecting a timing at which a predetermined manipulation is performed on the light-beam gun, detecting a strike point on the target board at the detected timing, and displaying the detected strike point as a strike result.

Another electronic competition method according to the present invention uses a light-beam gun for emitting light, and a strike point detecting means for detecting a strike point on a target board of the light emitted from the light-beam gun for competing for a score based on the strike point on the target board. The method includes displaying a strike point detected by the strike point detecting means in enlarged view when the strike point falls within a predefined area.

Specifically, the strike point may be displayed in enlarged view when the strike point detected by the strike point detecting means falls within a predefined radius from the center of the target board.

Another electronic competition method according to the present invention uses a light-beam gun for emitting light, and a strike point detecting means for detecting a strike point on a target board of the light emitted from the light-beam gun for competing for a score based on the strike point on the target board. The method includes displaying a strike point detected by the strike point detecting means in enlarged view when a predefined score or higher is calculated based on the strike point.

A server according to the present invention is for use with an electronic competition system having a plurality of light-beam guns each for emitting light, and a plurality of strike point detecting means each for detecting a strike point on a target board of the light emitted from the light-beam gun associated therewith. The server is configured to display a competition progress including the strike point detected by the strike point detecting means on display means. The server is responsive to strike points detected by the plurality of strike point detecting means for displaying on the display means the competition progress in an order in which the strike points are detected.

Alternatively, the server may display a strike point on the display means in real time when the strike point is detected by the strike point detecting means.

Another server according to the present invention is for use with an electronic competition system having a plurality of light-beam guns each for emitting light, and a plurality of strike point detecting means each for detecting a strike point on a target board of the light emitted from the light-beam gun associated therewith. The server is configured to display a competition progress including the strike point detected by the strike point detecting means on display means. The server displays on the display means a competition progress including the strike point detected by the strike point detecting means simultaneously with information on a competitor who plays a competition against the strike point detecting means.

Also, the server may simultaneously display on the display means information on a plurality of competitors, and competition progresses of the respective competitors.

Alternatively, the server may simultaneously display on the display means information on all competitors who participate in the competition, and competition progresses of the respective competitors.

Further alternatively, the server may simultaneously display on the display means information on competitors who satisfy a predetermined condition out of the competitors who participate in the competition, and the competition progresses of the respective competitors.

A computer program according to the present invention is for use in the electronic competition system having a plurality of light-beam guns each for emitting light, a plurality of strike point detecting means each for detecting a strike point on a target board of the light emitted from the light-beam gun associated therewith, and display means for displaying a competition progress including the strike point detected by the strike point detecting means. The computer program causes a computer to execute a procedure invoked in response to strike points detected by the plurality of strike point detecting means for displaying on the display means the competition progress including the strike points in an order in which the strike points are detected.

The computer program may further causes a computer to execute a procedure for displaying a strike point on the display means in real time when the strike point is detected by the strike point detecting means.

Another computer program according to the present invention is for use in an electronic competition system having a light-beam gun for emitting light, a strike point detecting means for detecting a strike point on a target board of the light emitted from the light-beam gun, and display means for displaying a competition progress including the strike point detected by the strike point detecting means. The computer program causes a computer to execute a procedure for displaying on the display means a competition progress including the strike point detected by the strike point detecting means simultaneously with information on a competitor who plays a competition against the strike point detecting means.

The computer program may further cause a computer to execute a procedure for simultaneously displaying on the display means information on all competitors who participate in the competition, and competition progresses of the respective competitors, a procedure for sequentially displaying on the display means information on all competitors who participate in the competition, and the competition progresses of the respective competitors on a competitor-by-competitor basis, and a procedure for simultaneously displaying on the first display means information on competitors who satisfy a predetermined condition out of the competitors who participate in the competition, and the competition progresses of the respective competitors.

Another computer program according to the present invention is for use in an electronic competition system having a plurality of light-beam guns each for emitting light, a plurality of strike point detecting means each for detecting a strike point on a target board of the light emitted from the light-beam gun associated therewith, and display means for displaying a competition progress including the strike point detected by the strike point detecting means. The computer program causes a computer to execute a procedure for displaying a strike trace on the target board of the light emitted from the light-beam gun, a procedure for disabling a display of the strike trace on the target board of the light emitted from the light-beam gun, and a procedure for displaying a strike point on the target board as a strike result when the strike point is detected at a timing at which a predetermined manipulation is performed on the light-beam gun.

Another computer program according to the present invention is for use in an electronic competition system comprising a plurality of light-beam guns each for emitting light, a plurality of strike point detecting means each for detecting a strike point on a target board of the light emitted from the light-beam gun associated therewith, and display means for displaying a competition progress including the strike point detected by the strike point detecting means. The computer program causes a computer to execute a procedure for displaying a strike trace on the target board of the light emitted from the light-beam gun, a procedure for disabling a display of the strike trace on the target board of the light emitted from the light-beam gun, a procedure for detecting a timing at which a predetermined manipulation is performed on the light-beam gun, and a procedure for displaying a strike point on the target board detected at the detected timing as a strike result.

Another computer program according to the present invention is for use in an electronic competition system comprising a plurality of light-beam guns each for emitting light, a plurality of strike point detecting means each for detecting a strike point on a target board of the light emitted from the light-beam gun associated therewith, and display means for displaying a competition progress including the strike point detected by the strike point detecting means. The computer program causes a computer to execute a procedure for displaying in enlarged view a strike point detected by the strike point detecting means when the strike point falls within a predefined area.

Another computer program according to the present invention is for use in an electronic competition system comprising a plurality of light-beam guns each for emitting light, a plurality of strike point detecting means each for detecting a strike point on a target board of the light emitted from the light-beam gun associated therewith, and display means for displaying a competition progress including the strike point detected by the strike point detecting means. The computer program causes a computer to execute a procedure for displaying in enlarged view a strike point detected by the strike point detecting means when the strike point falls within a predefined radius from the center of the target board.

Another computer program according to the present invention is for use in an electronic competition system comprising a plurality of light-beam guns each for emitting light, a plurality of strike point detecting means each for detecting a strike point on a target board of the light emitted from the light-beam gun associated therewith, and display means for displaying a competition progress including the strike point detected by the strike point detecting means. The computer program causes a computer to execute a procedure for displaying a strike point detected by the strike point detecting means in enlarged view when a predefined score or higher is calculated based on the strike point. (Actions)

According to the present invention configured as described above, in an electronic competition system has a plurality of light-beam guns each for emitting light, a plurality of strike point detecting means each for detecting a strike point on a target board of the light emitted from the light-beam gun associated therewith, and display means for displaying a competition progress including the strike point detected by the strike point detecting means, when strike points are detected by the plurality of strike point detecting means, a competition progress is displayed on the display means in an order in which the strike points are detected, thereby making it possible to readily recognize which competitor is associated with a competition progress displayed on the display means, and which competitor has emitted light from the laser gun.

In an electronic competition system configured to display simultaneously on the display means a competition progress including a strike point detected by the strike point detecting means, and information on a competitor who plays the competition against the strike point detecting means, it is possible to readily recognize which competitor is associated with the competition progress displayed on the display means.

Also, in an electronic competition system which has a light-beam gun for emitting light, a strike point detecting means for detecting a strike point on a target board of the light emitted from the light-beam gun, and display means for displaying a strike point detected by the strike point detecting means, wherein the electronic competition system determines a strike point on the target board as a strike result at a timing at which a predetermined manipulation is made on the light-beam gun which continuously emits the light, a mode is provided for disabling a display of the strike point on the target board on the display means. When the light is emitted from the light-beam gun in this mode, a competitor is allowed to shoot the light-beam gun without referencing a strike trace of the light on the target board. Thus, the competitor can readily put in practice, and a difficulty level is maintained, thereby encouraging beginners to participate in the competition. Also, competitors can enjoy playing because the difference in capability appears definitely in the competition.

Also, in an electronic competition system which has a light-beam gun for emitting light, a strike point detecting means for detecting a strike point on a target board of the light emitted from the light-beam gun, and display means for displaying a competition progress including the strike point detected by the strike point detecting means, wherein the display means is installed to be invisible at a position at which a competitor plays a competition by emitting light from the light-beam gun, the competitor can make shoot the light-beam gun without referencing a strike trace of the light on the target board.

Further, in an electronic competition system which is configured to display in enlarged view a strike point detected by the strike point detecting means within a predefined area, the strike point can be readily recognized on the target board. In this way, a situation in the competition can be clearly displayed for spectators, while maintaining a difficulty level of the competition, so that the spectators is more interested in and can enjoy watching the competition.

The above and other objects, features, and advantages of the present invention will become apparent from the following description with reference to the accompanying drawings, which illustrate examples of the present invention.

### BRIEF DESCRIPTION OF THE DRAWINGS

Fig. 1 is a diagram illustrating an exemplary configuration of a conventional electronic competition system for shooting which uses a laser gun for emitting laser light;
Fig. 2 is a diagram for describing how a competition is played in the electronic competition system illustrated in Fig. 1;
Fig. 3 is a diagram illustrating one embodiment of an electronic competition system according to the present invention;
Fig. 4 is a flow chart for describing a first embodiment of an electronic competition method in the electronic competition system illustrated in Fig. 3;
Fig. 5 is a flow chart for describing the first embodiment of the electronic competition method in the electronic competition system illustrated in Fig. 3;
Fig. 6 is a flow chart for describing a second embodiment of the electronic competition method in the electronic competition system illustrated in Fig. 3;
Fig. 7 a flow chart for describing a third embodiment of the electronic competition method in the electronic competition system illustrated in Fig. 3;
Fig. 8 a flow chart for describing a fourth embodiment of the electronic competition method in the electronic competition system illustrated in Fig. 3; and
Fig. 9 a flow chart for describing a fifth embodiment of the electronic competition method in the electronic competition system illustrated in Fig. 3.

### DETAILED DESCRIPTION OF THE PREFERRED EMBODIMENTS

In the following, embodiments of the present invention will be described with reference to the accompanying drawings.

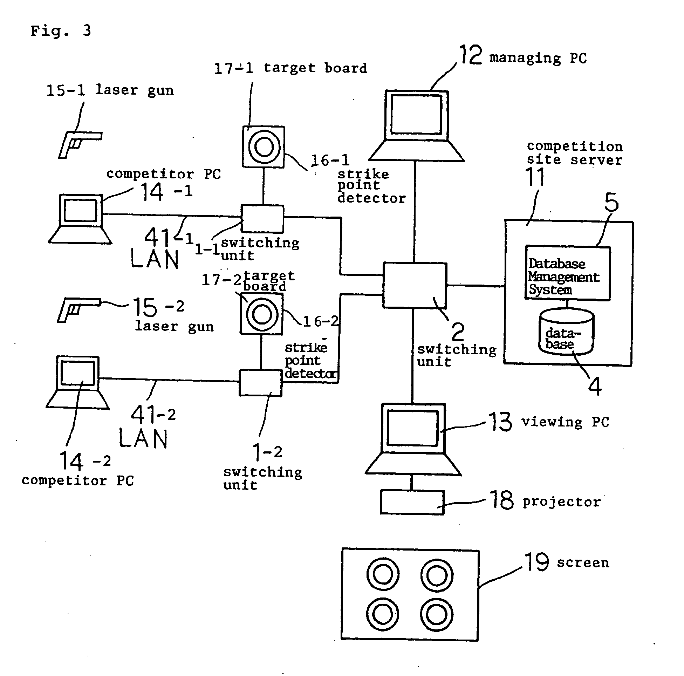

Fig. 3 is a diagram illustrating one embodiment of an electronic competition system according to the present invention.

As illustrated in Fig. 3, the electronic competition system comprises laser guns 15-1, 15-2 each manipulated by a competitor for discharging an light bullet implemented by laser light; strike point detectors 16-1, 16-2 each removably mounted with target board 17-1, 17-2 which receives the light bullet discharged from laser gun 15-1, 15-2, for detecting a strike point of the light bullet on target board 17-1, 17-2; competitor PCs 14-1, 14-2, each of which is a second display means for displaying the result of an impact detected by strike point detector 16-1, 16-2, and competition instructions to the competitor switching units 1-1, 1-2 for connecting strike point detectors 16-1, 16-2 and competitor PCs 14-1, 14-2, respectively, in LAN configuration; managing PC 12 for instructing the advance of a competition; viewing PC 13 which is a first display means for viewing the progress and result of a competition, or information on the competition; a projector 18 for projecting information displayed on viewing PC 13 onto screen 19; a competition site server 11 for totalizing the progress and result of a competition to display information on the progress and result of the competition or information on the competition itself on managing PC 12 and viewing PC 13; and switching unit 2 for interconnecting competition site server 11, managing PC 12 and viewing PC 13 in LAN configuration, and connecting in LAN configuration shooting bases, each comprised of strike point detector 16-1, 16-2 and competitor PC 14-1, 14-2, which are connected through switching units 1-1, 1-2 respectively, in LAN configuration. Competition site server 11 comprises Database Management System (DBMS) 5 for totalizing the progress and result of a competition in each competition site to create a database for management; and database 4 which is registered with data accumulated by Database Management System 5. Database Management System 5 generally used herein may be a Database Management System available, for example, from Oracle Co. Laser guns 15-1, 15-2 and strike point detectors 16-1, 16-2 are disposed at locations spaced from each other by a distance which is predefined for the shooting, and target boards of types commensurate with the distance are mounted on strike point detectors 16-1, 16-2, respectively. Switching units 1-1, 1-2 are switching HUBS for LANs 41-1, 41-2 of 10BASE-T, respectively. Also, while this embodiment shows two shooting bases, each of which is comprised of laser gun 15-1, 15-2, strike point detector 16-1, 16-2, target board 17-1, 17-2, competitor PC 14-1, 14-2, and switching unit 1-1, 1-2, the number of shooting bases is not limited to two. The term "shooting base" used herein means to include devices for use by a competitor in playing a competition such as strike point detector 16-1, 16-2, competitor PC 14-1, 14-2, and the like.

The following description will be made on an electronic competition method in the electronic competition system configured as described above, giving a plurality of embodiments as examples.

### (First Embodiment)

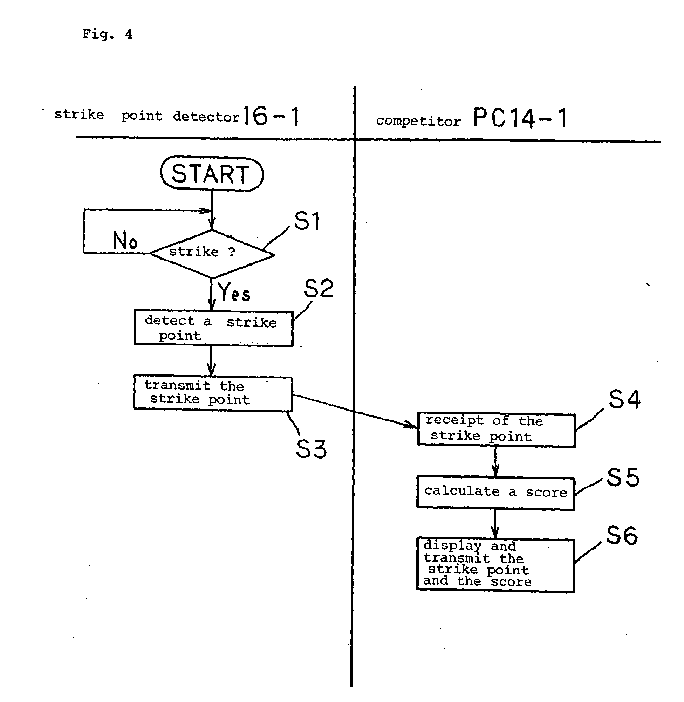

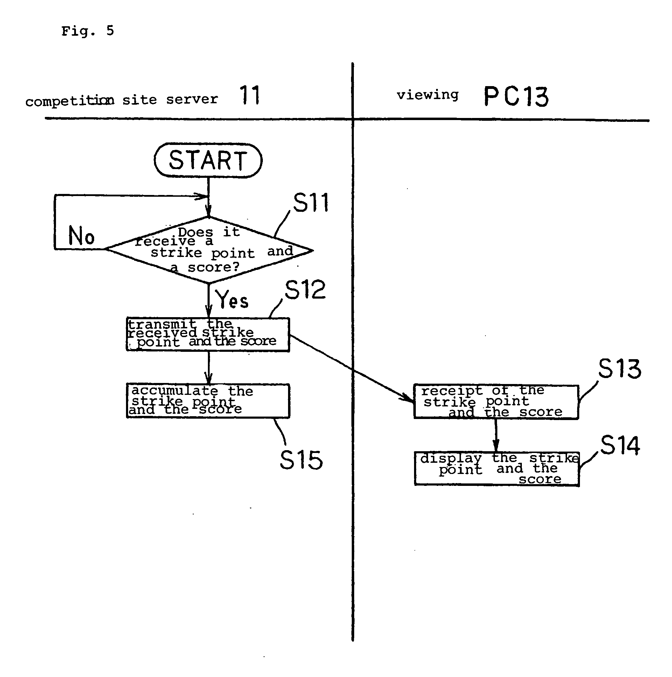

Figs. 4 and 5 are flow charts for describing a first embodiment of the electronic competition method in the electronic competition system illustrated in Fig. 3.

For example, as an light bullet discharged from laser gun 15-1 strikes on target board 17-1 mounted on strike point detector 16-1 (step S1), strike point detector 16-1 first detects a strike point on target board 17-1 (step S2), and transmits the detected strike point to competitor PC 14-1 (step S3).

Upon receipt of the strike point detected by strike point detector 16-1 (step S4), competitor PC 14-1 calculates a score based on the strike point (step S5), displays the strike point and associated score thereon, and transmits the information to competition site server 11 (step S6). Here, the information transmitted from competitor PC 14-1 to competition site server 11 includes information which can help identify a competitor who has discharged an light bullet using laser gun 15-1, in addition to the strike point and associated score.

Competition site server 11 detects at all times whether or not it receives a strike point and an associated score transmitted from any of competitor PCs 14-1, 14-2 connected thereto through switching unit 2 (step S11), and upon receipt of the strike point and score transmitted from any of competitor PCs 14-1, 14-2, the competition site server 11 transmits the received strike point and score to viewing PC 13 (step S12). Here, competition site server 11 has been registered with the names of competitors, shooting seat numbers and the like corresponding to information which can help identify the competitors, so that the competition site server 11 searches for the name of a competitor shooting seat number and the like corresponding to received identification information, and transmits the retrieved name of the competitor shooting seat number and the like together with the strike point and score to viewing PC 13.

Upon receipt of the strike point and associated score transmitted from competition site server 11 (step S13), viewing PC 13 displays the received strike point and score in real time (step S14). Since the information transmitted from competition site server 11 also includes the information such as the name of the competitor shooting seat number and the like, viewing PC 13 displays the name of the competitor associated with the strike result, seat number, and the like in addition to the strike result and score.

Competition site server 11 also accumulates strike points and associated scores transmitted from competitor PCs 14-1, 14-2, together with information stored in database 4 (step S15).

In this way, competition site server 11 detects at all times whether or not a strike point and an associated score are transmitted from any of competitor PCs 14-1, 14-2, and when a strike point and an associated score are transmitted from any of competitor PCs 14-1, 14-2, competition site server 11 transmits the transmitted strike point and score to viewing PC 13 for display, so that strike points on target boards 17-1, 17-2 and associated scores are displayed on viewing PC 13 in an order in which light bullets were discharged from laser guns 15-1, 15-2.

This sequence of processing permits spectators of the competition to readily recognize which competitor has discharged an light bullet from laser gun 15-1, 15-2 at which timing, and which competitor is associated with a strike point and a score currently displayed on viewing PC 13.

The sequence of processing described above is controlled by a program in competition site server 11. However, the control for display on viewing PC 13 and projector 18 may be conducted in viewing PC 13.

### (Second Embodiment)

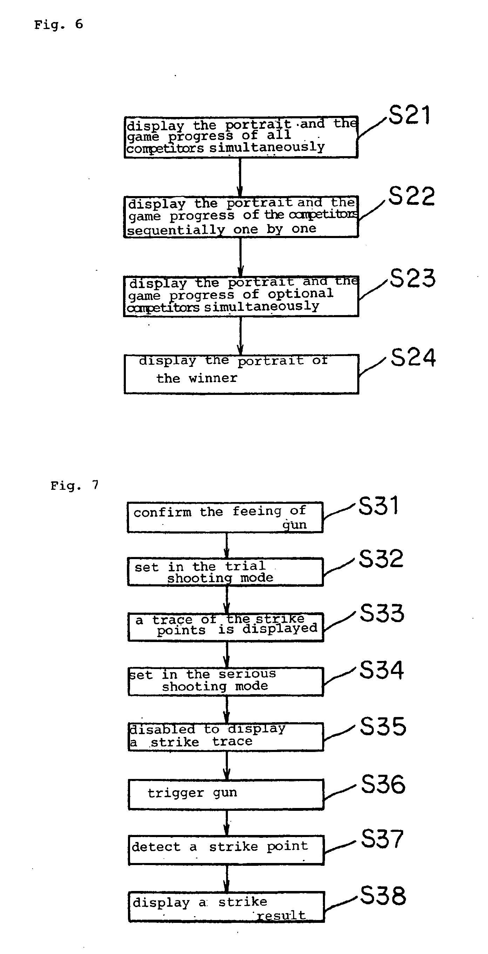

Fig. 6 is a flow chart for describing a second embodiment of the electronic competition method in the electronic competition system illustrated in Fig. 3.

The second embodiment will be described in connection with exemplary processing for displaying a portrait of a competitor on viewing PC 13. The portrait of a competitor is more preferably taken by a camera (not shown) connected to competitor PC 14-1, 14-2, strike point detector 16-1, 16-2 and competition site server 11 through LAN or the like, because the ever changing expression of the competitor can be viewed simultaneously with the progress of the competition. Not only the portrait, the upper half body, whole body or arms of the competitor may be taken for displaying the posture of the competitor and a triggering operation of the competitor. Also, a camera control PC may be additionally provided to control zooming, fading, orientation adjustment, and the like through remote control.

During a competition, the screen of viewing PC 13 is divided into a number of areas as much as competitors who are participating in the competition to display the portrait of a competitor and the competition progress of the competitor in one of the divided areas on a competitor-by-competitor basis (step S21). For example, when eight competitors are participating in a competition, the screen of viewing PC 13 is divided into eight areas, and the portrait and competition progress of each competitor are displayed in one of the divided areas. Alternatively, the screen of viewing PC 13 may be divided into 16 areas, such that portraits of respective competitors are displayed in eight of the divided areas, while competition progresses of the respective layers are displayed in the remaining eight of the divided areas.

Next, the screen of viewing PC 13 is divided into two areas, wherein the portrait of a play is displayed in one of the divided areas, and the competition progress of the competitor is displayed in the other area. This display is sequentially switched from one competitor to another (step S22). The switching of displays at step S22 may be performed such that the portrait and competition progress are displayed for the next competitor so that spectators of the competition can know the competitor who is to play next and the competition progress of the competitor. Here, light bullets are discharged at all times from laser guns 15-1, 15-2, so that if a competitor triggers laser gun 15-1, 15-2, the position pointed by laser gun 15-1, 15-2 at that timing is determined to be a strike point. Therefore, upon detection of an light bullet on target board 17-1, 17-2, the viewing PC 13 may display the portrait of a competitor manipulating a laser gun which has discharged the light bullet, and the competition progress, resulting in a display of the portrait of the competitor who is to play next, and the competition progress.

Next, after the competition has been progressed to some degree, the portraits and competition progresses of competitors completing in score at that time are displayed on viewing PC 13 (step S23). In this event, assuming, for example, that three competitors are competing in score, the screen of viewing PC 13 is divided into three areas, such that the portrait and competition progress of each competitor is displayed in one of the divided areas. Since competition site server 11 accumulates a score so far acquired by each competitor, it is possible to know competitors competing in score based on the result of the totalization. The determination on whether competitors are competing in score may be previously set in competition site server 11 which makes such determination when a difference in score between the competitors is equal to or less than a predefined points.

The competition progress displayed on the screen of viewing PC 13 at the aforementioned steps S21 - S23 may include a strike trace of light bullets on target board 17-1, 17-2, a total score so far acquired by each competitor, and the like. As described above, since light bullets are discharged at all times from laser guns 15-1, 15-2, a strike trace along which a competitor has oriented laser gun 15-1, 15-2 can be detected on target board 17-1, 17-2, and displayed on viewing PC 13.

Then, after the competition is over, the portrait of the winner is displayed on the screen of viewing PC 13 (step S24). Again, in this event, the winner is recognized based on the result of the totalization in competition site server 11. In addition, the expression of the winner may be photographed by a camera as mentioned above from the end of the totalization to the announcement of the winner, such that a change in the expression of the winner is displayed on the viewing PC 13 after the announcement of the winner.

The switching of displays on viewing PC 13 as mentioned above may be made by managing PC 12, or by a computer program previously installed in viewing PC 13 or competition site server 11 for automatically making the switching in accordance with a situation of the competition, or the like.

While the second embodiment has been described in connection with an example in which the screen of viewing PC 13 is divided into a predetermined number of areas for displaying the portrait and competition progress of each competitor in each of the divided areas, a plurality of viewing PCs 13 may be installed to display the portrait and competition progress of each competitor on an associated viewing PC 13.

Instead of viewing PC 13, a TV monitor may be separately provided, in which case a switcher is used to display AV output signals from cameras for photographing competitors and from competitor PCs 14-1 in multiple windows on the screen, and to switch such AV output signals to display the expressions of respective competitors and strike point information including traces on the TV monitor. The AV output signal of competitor PC 14-1 may be replaced with AV output signals from strike point detector 16-1, competition site server 11, and the like. Furthermore, viewing PC 13 may be used to control the division and switching of the switcher.

### (Third Embodiment)

Fig. 7 is a flow chart for describing a third embodiment of the electronic competition method in the electronic competition system illustrated in Fig. 3.

For example, a competitor first takes laser gun 15-1 before a competition is started to confirm the feeing of laser gun 15-1 (step S31). In this event, since laser gun 15-1 is powered off, no light bullet is discharged from laser gun 15-1.

Next, the competitor sets competitor PC 14-1 in the trial shooting mode (step S32), powers on laser gun 15-1, and orients laser gun 15-1 toward target board 17-1, causing laser gun 15-1 to discharge an light bullet. Here, strike point detector 16-1 transmits a conical beam, generated by an infrared LED, toward an associated shooting box, such that an light bullet is discharged from laser gun 15-1 when laser gun 15-1 receives the conical beam transmitted from strike point detector 16-1.

Strike point detector 16-1 detects a strike point on target board 17-1 of each light bullet discharged from laser gun 15-1, and a trace of the strike points is displayed on competitor PC 14-1 (step S33). Subsequently, when the competitor triggers laser gun 15-1, the strike point on target board 17-1 at that timing may be determined as a strike result which may be displayed as an impact point or a score. In the trial shooting mode, even if a score is calculated based on the strike point, the score is not reflected to the competition. In shooting using real bullets, since there is a delay such as a flying time from triggering to strike, the strike result is preferably calculated in consideration of such delay as well when the light bullet is used.

As a strike trace on target board 17-1 of light bullets discharged from laser gun 15-1 is displayed on competitor PC 14-1 in the trial shooting mode, the competitor can anticipate the posture taken by him when he holds laser gun 15-1 for discharging light bullets from laser gun 15-1 in serious shooting, and a strike point on target board 17-1 depending on how he triggers laser gun 15-1.

Next, as competitor PC 14-1 is set in the serious shooting mode (step S34), competitor PC 14-1 is disabled to display a strike trace on target board 17-1 of light bullets discharged from laser gun 15-1 even if the competitor orients laser gun 15-1 toward target board 17-1 (step S35).

As the competitor triggers laser gun 15-1 in this state (step S36), strike point detector 16-1 detects a strike point on target board 17-1 at that timing (step S37), and a strike result is displayed on competitor PC 14-1 based on the strike point (step S38).

In the serious shooting mode, the trace may be displayed after the competitor triggers laser gun 15-1 on condition that the display does not affect the competition. As one application of displaying the trace, the trace may be recorded, and after detecting a timing at which the competitor triggers laser gun 15-1, the trace may be reproduced up to that timing.

The sequence of processing described above is controlled by a program within competitor PCs 14-1, 14-2.

Alternatively, part or all of the control may be taken over to competition site server 11 or strike point detector 16-1.

The switching between the trial shooting mode and serious shooting mode may be made by the laser gun. In this configuration, mode information may be added to each light bullet discharged from laser gun 15-1, such that the mode can be determined in competitor PC 14-1 based on this information.

### (Fourth Embodiment)

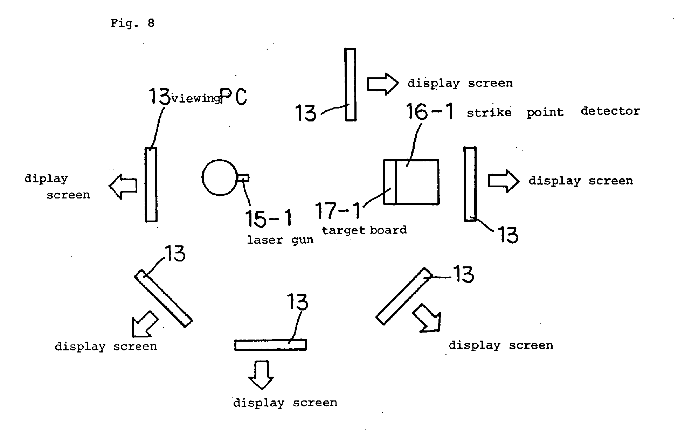

Fig. 8 is a diagram for describing a fourth embodiment of the electronic competition method in the electronic competition system illustrated in Fig. 2, showing conditions for installing viewing PC 13.

As illustrated in Fig. 8, in the fourth embodiment, viewing PC 13 is installed such that its display screen is not visible from a shooting seat from which a competitor discharges light bullets from laser gun 15-1 to target board 17-1.

In this way, while the third embodiment does not display a strike trace on target board 17-1 on competitor PC 14-1 in the serious shooting mode, the fourth embodiment does display the strike trace on target board 17-1 on viewing PC 13, thereby permitting spectators to view the strike trace on target board 17-1 in serious shooting.

Even when the display screen of viewing PC 13 is oriented toward the shooting seat, a shield may be placed between the shooting seat and viewing PC 13 to make the display screen of viewing PC 13 invisible from the shooting seat.

While the fourth embodiment has been described in connection with the conditions for installing viewing PC 13, competitor PCs 14-1, 14-2 may be installed likewise based on similar installation conditions in serious shooting.

### (Fifth Embodiment)

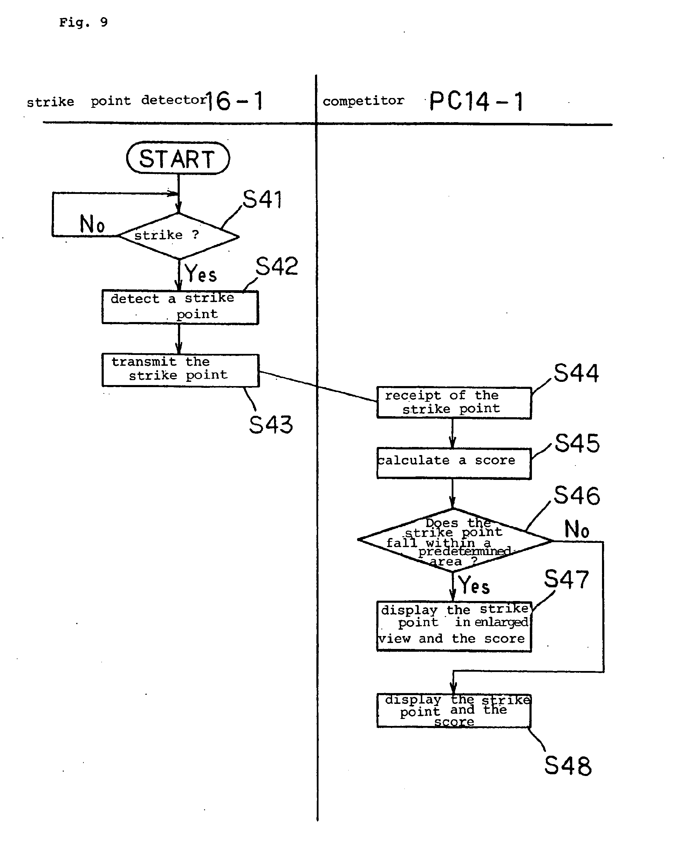

Fig. 9 is a flow chart for describing a fifth embodiment of the electronic competition method in the electronic competition system illustrated in Fig. 3.

For example, as an light bullet discharged from laser gun 15-1 strikes on target board 17-1 mounted on target position detector 16-1 (step S41), strike point detector 16-1 first detects a strike point on target board 17-1, and transmits the detected strike point to competitor PC 14-1 (step S43).

Upon receipt of the strike point detected by strike point detector 16-1 (step S44), competitor PC 14-1 calculates a score based on the strike point (step S45).

Next, competitor PC 14-1 determines whether or not the strike point received at step S44 falls within a predetermined area on target board 17-1 (step S46). When within the predetermined area, competitor PC 14-1 displays on the screen the strike point received at step S44 in enlarged view, as well as the score calculated at step S45 (step S47). Here, the predetermined area on target board 17-1 may be an area within a predefined radius from the center of target board 17-1.

On the other hand, when the strike point received at step S44 does not fall within the predetermined area, competitor display PC 14-1 displays the strike point received at step S44, and the score calculated at step S45 (step S48).

In this way, when a competitor shoots an light bullet onto target board 17-1 with high accuracy, the strike point is displayed in enlarged view, thereby making it possible to readily recognize a deviation from the center of target board 17-1. Such display of the strike point in enlarged view depending on the accuracy of strike on target board 17-1 may be made as well when the score calculated at step S45 is equal to or higher than a predefined level.

Rather than depending on the accuracy of strike on target board 17-1, the strike point on target board 17-1 may be displayed in enlarged view about the strike point.

With such enlarged view, the strike point can be readily determined even when competitors are fighting at close quarters in strike accuracy with substantially full scores in a final match or the like, or even when a sufficiently large display device is not available to make it difficult to clearly view a difference in strike point between the competitors.

The sequence of processing described above is controlled by a program within competitor PCs 14-1, 14-2.

While in the fifth embodiment, competitor PC 14-1 determines whether or not the strike point is displayed in enlarged view, this determination may be made in strike point detector 16-1 or competition site server 11.

Also, an enlarged view of the strike point as mentioned above may be displayed as well on viewing PC 13.

In the respective embodiments described above, the competition progress is displayed on competitor PCs 14-1, 14-2 and viewing PC 13, however, the competition progress may be audible displayed, or recording information such as the highest record so far acquired, and competition progress may be displayed in different colors or in different character fonts in a readily perceivable manner. Furthermore, the competition progress may be highlighted when the currently highest record is broken.

While a preferred embodiment of the present invention has been described using specific terms, such description is for illustrative purposes only, and it is to be understood that changes and variations may be made without departing from the spirit or scope of the following claims.

## Claims

1. An electronic competition system comprising:
a plurality of light-beam guns each for emitting light;
a plurality of strike point detecting means each for detecting a strike point on a target board of the light emitted from said light-beam gun associated therewith;
first display means for displaying a competition progress including the strike point detected by said strike point detecting means; and
a server responsive to strike points detected by said plurality of strike point detecting means for displaying on said first display means the competition progress in an order in which the strike points are detected.

2. The electronic competition system according to claim 1, wherein:
said server displays a strike point on said first display means in real time when the strike point is detected by said strike point detecting means.

3. An electronic competition system comprising:
a light-beam gun for emitting light;
a strike point detecting means for detecting a strike point on a target board of the light emitted from said light-beam gun;
first display means for displaying a competition progress including the strike point detected by said strike point detecting means; and
a server for displaying on said first display means a competition progress including the strike point detected by said strike point detecting means simultaneously with information on a competitor who plays a competition against said strike point detecting means.

4. The electronic competition system according to claim 3, wherein:
said server simultaneously displays on said first display means information on a plurality of competitors, and competition progresses of the respective competitors.

5. The electronic competition system according to claim 4, wherein:
said server simultaneously displays on said first display means information on all competitors who participate in the competition, and competition progresses of the respective competitors.

6. The electronic competition system according to claim 3, wherein:
said server simultaneously displays on said first display means information on competitors who satisfy a predetermined condition out of the competitors who participate in the competition, and the competition progresses of the respective competitors.

7. The electronic competition system according to claim 4, wherein:
said server simultaneously displays on said first display means information on competitors who satisfy a predetermined condition out of the competitors who participate in the competition, and the competition progresses of the respective competitors.

8. An electronic competition system comprising:
a light-beam gun for emitting light;
a strike point detecting means for detecting a strike point on a target board of the light emitted from said light-beam gun; and
second display means for displaying the strike point detected by said strike point detecting means,
wherein said electronic competition system determines a strike point on said target board as a strike result at a timing at which a predetermined manipulation is made on said light-beam gun which continuously emits light, and
said electronic competition system has a mode in which the strike point on said target board is not displayed on said second display means.

9. The electronic competition system according to claim 8, wherein:
said mode is that the strike point on said target board is not displayed on said second display means until said predetermined manipulation is performed on said light-beam gun.

10. The electronic competition system according to claim 8, wherein:
said mode is that the strike point on said target board is not displayed on said second display means until said predetermined manipulation is performed on said light-beam gun, and the timing at which said manipulation is performed is detected by said strike point detecting means.

11. The electronic competition system according to claim 8, wherein:
said mode can be set on said second display means, wherein information on the strike point on said target board is made invalid when said mode is set.

12. The electronic competition system according to claim 8, wherein:
said mode can be set on said light-beam gun, wherein said light-beam gun adds to the light a signal for making invalid a display of the strike point of emitted light when said mode is set, and
said second display means does not display the strike point of the light on said target board when the light emitted from said light-beam gun includes the signal for making the display invalid.

13. An electronic competition system comprising:
a light-beam gun for emitting light;
a strike point detecting means for detecting a strike point on a target board of the light emitted from said light-beam gun; and
first display means for displaying a competition progress including the strike point detected by said strike point detecting means,
said first display means being installed to be invisible at a position at which a competitor plays a competition by emitting light from said light-beam gun.

14. The electronic competition system according to claim 13, wherein:
said first display means has a display screen oriented in a direction in which said display screen is invisible from said position.

15. The electronic competition system according to claim 13, further comprising:
a shield disposed between said position and said first display means for making said first display means invisible from said position.

16. An electronic competition system comprising:
a light-beam gun for emitting light;
a strike point detecting means for detecting a strike point on a target board of the light emitted from said light-beam gun; and
second display means for displaying the strike point detected by said strike point detecting means,
said second display means displaying the strike point in enlarged view when the strike point detected by said strike point detecting means falls within a predefined area.

17. The electronic competition system according to claim 16, wherein:
said second display means displays the strike point in enlarged view when the strike point detected by said strike point detecting means falls within a predefined radius from a center of said target board.

18. An electronic competition system comprising:
a light-beam gun for emitting light;
a strike point detecting means for detecting a strike point on a target board of the light emitted from said light-beam gun; and
second display means for displaying the strike point detected by said strike point detecting means,
said second display means displaying the strike point in enlarged view when a predetermined score or higher is calculated based on the strike point detected by said strike point detecting means.

19. An electronic competition system comprising:
a light-beam gun for emitting light;
a strike point detecting means for detecting a strike point on a target board of the light emitted from said light-beam gun; and
first display means for displaying a competition progress including the strike point detected by said strike point detecting means,
said first display means displaying the strike point in enlarged view when the strike point detected by said strike point detecting means falls within a predefined area.

20. The electronic competition system according to claim 19, wherein:
said first display means displays the strike point in enlarged view when the strike point detected by said strike point detecting means falls within a predefined radius from a center of said target board.

21. An electronic competition system comprising:
a light-beam gun for emitting light;
a strike point detecting means for detecting a strike point on a target board of the light emitted from said light-beam gun; and
first display means for displaying a competition progress including the strike point detected by said strike point detecting means,
said first display means displaying the strike point in enlarged view when a predetermined score or higher is calculated based on the strike point detected by said strike point detecting means.

22. An electronic competition system comprising:
a light-beam gun for emitting light;
a strike point detecting means for detecting a strike point on a target board of the light emitted from said light-beam gun; and
second display means for displaying the strike point detected by said strike point detecting means,
said second display means simultaneously displaying a past competition progress and a current competition progress.

23. An electronic competition system comprising:
a light-beam gun for emitting light;
a strike point detecting means for detecting a strike point on a target board of the light emitted from said light-beam gun; and
first display means for displaying a competition progress including the strike point detected by said strike point detecting means,
said first display means simultaneously displaying a past competition progress and a current competition progress.

24. An electronic competition method using a plurality of light-beam guns each for emitting light, and a plurality of strike point detecting means each for detecting a strike point on a target board of the light emitted from said light-beam gun associated therewith for competing for a score based on the strike point on said target board, said method including:
detecting strike points by said plurality of strike point detecting means, and sequentially displaying a competition progress on display means in an order in which the strike points are detected, said competition progress including the strike points.

25. The electronic competition method according to claim 24, wherein a strike point is displayed on said display means in real time when the strike point is detected by said strike point detecting means.

26. An electronic competition method using a light-beam gun for emitting light, and a strike point detecting means for detecting a strike point on a target board of the light emitted from said light-beam gun for competing for a score based on the strike point on said target board, said method including:
displaying a competition progress including the strike point detected by said strike point detecting means on display means simultaneously with information on a competitor who plays a competition against said strike point detecting means.

27. The electronic competition method according to claim 26, comprising the steps of:
simultaneously displaying on said display means information on all competitors who participate in the competition, and competition progresses of the respective competitors;
sequentially displaying on said display means information on all competitors who participate in the competition, and the competition progresses of the respective competitors on a competitor-by-competitor basis; and
simultaneously displaying on said first display means information on competitors who satisfy a predetermined condition out of the competitors who participate in the competition, and the competition progresses of the respective competitors.

28. An electronic competition method using a light-beam gun for emitting light, and a strike point detecting means for detecting a strike point on a target board of the light emitted from said light-beam gun for competing for a score based on the strike point on said target board, said method comprising the steps of:
displaying a strike trace on said target board of the light emitted from said light-beam gun;
disabling a display of the strike trace on said target board of the light emitted from said light-beam gun;
detecting a strike point on said target board at a timing at which a predetermined manipulation is made on said light-beam gun; and
displaying the detected strike point as a strike result.

29. An electronic competition method using a light-beam gun for emitting light, and a strike point detecting means for detecting a strike point on a target board of the light emitted from said light-beam gun for competing for a score based on the strike point on said target board, said method comprising the steps of:
displaying a strike trace on said target board of the light emitted from said light-beam gun;
disabling a display of the strike trace on said target board of the light emitted from said light-beam gun;
detecting a timing at which a predetermined manipulation is performed on said light-beam gun;
detecting a strike point on said target board at the detected timing; and
displaying the detected strike point as a strike result.

30. An electronic competition method using a light-beam gun for emitting light, and a strike point detecting means for detecting a strike point on a target board of the light emitted from said light-beam gun for competing for a score based on the strike point on said target board, said method including:
displaying a strike point detected by said strike point detecting means in enlarged view when the strike point falls within a predefined area.

31. The electronic competition method according to claim 30, wherein:
said strike point is displayed in enlarged view when the strike point detected by said strike point detecting means falls within a predefined radius from a center of said target board.

32. An electronic competition method using a light-beam gun for emitting light, and a strike point detecting means for detecting a strike point on a target board of the light emitted from said light-beam gun for competing for a score based on the strike point on said target board, said method including:
displaying a strike point detected by said strike point detecting means in enlarged view when a predefined score or higher is calculated based on the strike point.

33. A server for use with an electronic competition system comprising a plurality of light-beam guns each for emitting light, and a plurality of strike point detecting means each for detecting a strike point on a target board of the light emitted from said light-beam gun associated therewith, said server being configured to display a competition progress including the strike point detected by said strike point detecting means on display means, wherein:
said server is responsive to strike points detected by said plurality of strike point detecting means for displaying on said display means the competition progress in an order in which the strike points are detected.

34. The server according to claim 33, wherein:
said server displays a strike point on said display means in real time when the strike point is detected by said strike point detecting means.

35. A server for use with an electronic competition system comprising a plurality of light-beam guns each for emitting light, and a plurality of strike point detecting means each for detecting a strike point on a target board of the light emitted from said light-beam gun associated therewith, said server being configured to display a competition progress including the strike point detected by said strike point detecting means on display means, wherein:
said server displays on said display means a competition progress including the strike point detected by said strike point detecting means simultaneously with information on a competitor who plays a competition against said strike point detecting means.

36. The server according to claim 35, wherein:
said server simultaneously displays on said display means information on a plurality of competitors and competition progresses of the respective competitors.

37. The server according to claim 36, wherein:
said server simultaneously displays on said display means information on all competitors who participate in the competition, and competition progresses of the respective competitors.

38. The server according to claim 35, wherein:
said server simultaneously displays on said display means information on competitors who satisfy a predetermined condition out of the competitors who participate in the competition, and the competition progresses of the respective competitors.

39. The server according to claim 36, wherein:
said server simultaneously displays on said display means information on competitors who satisfy a predetermined condition out of the competitors who participate in the competition, and the competition progresses of the respective competitors.

40. An electronic competition system having a computer program for use in the electronic competition system comprising a plurality of light-beam guns each for emitting light, a plurality of strike point detecting means each for detecting a strike point on a target board of the light emitted from said light-beam gun associated therewith, and display means for displaying a competition progress including the strike point detected by said strike point detecting means, said computer program causing a computer to execute:
a procedure invoked in response to strike points detected by said plurality of strike point detecting means for displaying on said display means the competition progress including the strike points in an order in which the strike points are detected.

41. An electronic competition system having a computer program for use in the electronic competition system according to claim 40, said computer program further causing a computer to execute:
a procedure for displaying a strike point on said display means in real time when the strike point is detected by said strike point detecting means.

42. An electronic competition system having a computer program for use in the electronic competition system comprising a light-beam gun for emitting light, a strike point detecting means for detecting a strike point on a target board of the light emitted from said light-beam gun, and display means for displaying a competition progress including the strike point detected by said strike point detecting means, said computer program causing a computer to execute:
a procedure for displaying on said display means a competition progress including the strike point detected by said strike point detecting means simultaneously with information on a competitor who plays a competition against said strike point detecting means.

43. An electronic competition system having a computer program for use in the electronic competition system according to claim 42, further causing a computer to execute:
a procedure for simultaneously displaying on said display means information on all competitors who participate in the competition, and competition progresses of the respective competitors;
a procedure for sequentially displaying on said display means information on all competitors who participate in the competition, and the competition progresses of the respective competitors on a competitor-by-competitor basis; and
a procedure for simultaneously displaying on said display means information on competitors who satisfy a predetermined condition out of the competitors who participate in the competition, and the competition progresses of the respective competitors.

44. An electronic competition system having a computer program for use in the electronic competition system comprising a plurality of light-beam guns each for emitting light, a plurality of strike point detecting means each for detecting a strike point on a target board of the light emitted from said light-beam gun associated therewith, and display means for displaying a competition progress including the strike point detected by said strike point detecting means, said computer program causing a computer to execute:
a procedure for displaying a strike trace on said target board of the light emitted from said light-beam gun;
a procedure for disabling a display of the strike trace on said target board of the light emitted from said light-beam gun; and
a procedure for displaying a strike point on said target board as a strike result, said strike point being detected at a timing at which a predetermined manipulation is performed on said light-beam gun.

45. An electronic competition system having a computer program for use in the electronic competition system comprising a plurality of light-beam guns each for emitting light, a plurality of strike point detecting means each for detecting a strike point on a target board of the light emitted from said light-beam gun associated therewith, and display means for displaying a competition progress including the strike point detected by said strike point detecting means, said computer program causing a computer to execute:
a procedure for displaying a strike trace on said target board of the light emitted from said light-beam gun;
a procedure for disabling a display of the strike trace on said target board of the light emitted from said light-beam gun;
a procedure for detecting a timing at which a predetermined manipulation is performed on said light-beam gun; and
a procedure for displaying a strike point on said target board detected at the detected timing as a strike result.

46. An electronic competition system having a computer program for use in the electronic competition system comprising a plurality of light-beam guns each for emitting light, a plurality of strike point detecting means each for detecting a strike point on a target board of the light emitted from said light-beam gun associated therewith, and display means for displaying a competition progress including the strike point detected by said strike point detecting means, said computer program causing a computer to execute:
a procedure for displaying in enlarged view a strike point detected by said strike point detecting means when the strike point falls within a predefined area.

47. An electronic competition system having a computer program for use in the electronic competition system comprising a plurality of light-beam guns each for emitting light, a plurality of strike point detecting means each for detecting a strike point on a target board of the light emitted from said light-beam gun associated therewith, and display means for displaying a competition progress including the strike point detected by said strike point detecting means, said computer program causing a computer to execute:
a procedure for displaying in enlarged view a strike point detected by said strike point detecting means when the strike point falls within a predefined radius from a center of said target board.

48. An electronic competition system having a computer program for use in the electronic competition system comprising a plurality of light-beam guns each for emitting light, a plurality of strike point detecting means each for detecting a strike point on a target board of the light emitted from said light-beam gun associated therewith, and display means for displaying a competition progress including the strike point detected by said strike point detecting means, said computer program causing a computer to execute:
a procedure for displaying a strike point detected by said strike point detecting means in enlarged view when a predefined score or higher is calculated based on the strike point.
